# EUROPÄISCHE PATENTSCHRIFT

(11) **EP 3 921 859 B1**
(45) Veröffentlichungstag und Bekanntmachung des Hinweises auf die Patenterteilung: **30.07.2025**
(21) Anmeldenummer: 20703701.1
(22) Anmeldetag: 30.01.2020
(51) Int. Cl.: H01F 38/14, H02J 50/10, B60L 53/12, H01F 27/255, H01F 27/38

(54) **SEKUNDÄRSPULENTOPOLOGIE**
SECONDARY COIL TOPOLOGY
TOPOLOGIE DE BOBINE SECONDAIRE

(30) Priorität: 04.02.2019 DE 102019102654
(43) Veröffentlichungstag der Anmeldung: 15.12.2021
(73) Patentinhaber: Industrieanlagen-Betriebsgesellschaft mbH, 85521 Ottobrunn (DE)
(72) Erfinder: EFFENBERGER, Ralf, 21382 Brietlingen (DE); SCHULTE, Jürgen, 26906 Dersum (DE); SNIEDERS, Gerold, 26871 Papenburg (DE)
(74) Vertreter: Meissner Bolte Partnerschaft mbB
(86) Internationale Anmeldenummer: PCT/EP2020/052242
(87) Internationale Veröffentlichungsnummer: WO 2020/160989

(56) Entgegenhaltungen:
- DE-A1- 102016 211 198
- DE-A1- 102016 223 534
- US-A1- 2016 303 981
- US-A1- 2017 264 130

## Beschreibung

Die Erfindung betrifft eine Spulenvorrichtung zum Empfangen eines magnetischen Wechselfelds, insbesondere für ein induktives Ladesystem. Die Spulenvorrichtung ist auch für eine Sekundäreinrichtung eines induktiven Ladesystems zur berührungsfreien induktiven Energieübertragung an Transportmittel vorgesehen.

Im Folgenden sind unter dem Begriff "Transportmittel" durch einen eigenen Motor angetriebene Fahrzeuge, wie zum Beispiel Kraftfahrzeuge, Krafträder und Zugmaschinen, zu verstehen. Derartige Fahrzeuge können an Schienen oder nicht an Schienen gebunden sein. Der Motor selbst kann einen Verbrennungsmotor, einen Elektromotor oder eine Kombination der beiden, z.B. in Form eines Hybridantriebs, aufweisen.

Unter dem Begriff "induktives Ladesystem" wird ein System zur berührungsfreien Energieübertragung mittels magnetischer Wechselfelder verstanden. Das System weist eine Primäreinrichtung (auch als "Primärsystem" oder "Primärteil" bezeichnet) als Energiequelle und eine Sekundäreinrichtung (auch als "Sekundärsystem" oder "Sekundärteil" bezeichnet) als Energieempfänger auf; ähnlich wie eine Transformatorvorrichtung. Die Primäreinrichtung ist ausgebildet, ein magnetisches Wechselfeld zu erzeugen. Die Sekundäreinrichtung ist ausgebildet, ein oder das magnetische Wechselfeld zu empfangen und einen Induktionsstrom aus dem magnetischen Wechselfeld zu gewinnen. Die Erzeugung des magnetischen Wechselfelds wird durch Wechselstrom-durchflossene elektrische Leiter, insbesondere Spulen, der Primäreinrichtung und die Erzeugung des Induktionsstroms durch im Magnetfeld positionierte elektrische Leiter der Sekundäreinrichtung erreicht.

WO 2016114893 beschreibt eine Vorrichtung zur drahtlosen Energieübertragung und weist eine erste Spule mit einem ersten Wicklungsweg und eine zweite Spule mit einem zweiten Wicklungsweg auf. Die Vorrichtung umfasst eine Halteeinrichtung, die ausgebildet ist, die erste Spule und die zweite Spule in einem vorbestimmten Wicklungsmuster zu halten. Jeder der ersten und zweiten Wicklungswege umfasst mehrere aufeinander folgende Wicklungsgruppen. In jeder der Vielzahl von aufeinander folgenden Wicklungsgruppen ist mindestens ein Teil jeder Wicklung von aufeinander folgenden Wicklungen auf einer unmittelbar vorhergehenden Wicklung auf der Halteeinrichtung für eine vorbestimmte Anzahl von Wicklungen angeordnet. Die gezeigte Spulenanordnung kann sowohl als Transmitter oder Empfänger fungieren.

US 2017/0264130 A1 beschreibt eine erste Ladespule mit einem oder mehreren Leitern, die in einem ersten Wicklungsmuster angeordnet sind und eine zweite Ladespule mit einem oder mehreren Leitern, die in einem zweiten Wicklungsmuster angeordnet sind.

DE 10 2016 223 534 A1 betrifft ein induktives Bauelement mit einem plattenförmigen Ferritkern und einer über dem plattenförmigen Ferritkern angeordneten Hybrid-Doppel-D-Solenoid-Spule.

DE 10 2016 211 198 A1 betrifft eine Vorrichtung zur induktiven Energieübertragung, wobei die Sendevorrichtung mindestens zwei Primärspulen umfasst, die parallel und oberhalb zu einer ersten Ebene angeordnet sind.

US 2016/0303981 A1 beschreibt eine induktive Ladespulenanordnung für ein Fahrzeug mit einer ersten Grundplatte mit einer ersten Spule zur Übertragung des magnetischen Flusses und einer zweiten Grundplatte mit einer zweiten Spule, um den magnetischen Fluss zum Laden eines Fahrzeugs zu empfangen. Die zweite Spule definiert dabei ein Fenster zur Positionierung mindestens eines Ferrits.Für die elektromagnetische Induktion werden im Wesentlichen zwei verschiedene Spulentopologien verwendet. Bei der ersten Spulentopologie handelt es sich um eine Zirkularspule, d.h. eine Spule mit mindestens einer Windung um einen Mittelpunkt. Bei der zweiten Spulentopologie handelt es sich um eine Bipolarspule (oder auch als Doppel-D Spule bekannt), die eine erste Spule mit einer oder mehreren Windungen um einen ersten Mittelpunkt und eine zweite Spule mit einer oder mehreren Windungen um einen zweiten Mittelpunkt aufweist. Hierbei ist die erste Spule mit der zweiten Spule elektrisch seriell verbunden und gegenläufig zur zweiten Spule gewickelt.

Der Stand der Technik hat den Nachteil, nur für ein bestimmtes Magnetfeldmuster ausgebildet zu sein, bei dem die Spulenanordnung optimal funktioniert und eine optimale Energieübertragung erlaubt. Technisch formuliert haben derartige Spulenanordnungen Schwierigkeiten bei der Interoperabilität. Das bedeutet, dass z.B. ein Fahrzeug mit einer Sekundärspule eines Herstellers auf einer Bodenvorrichtung mit einer Primärspule eines anderen Herstellers nur mit hohen Verlusten geladen werden kann (Interoperabilität).

Für jedes erzeugte Magnetfeldmuster ist somit eine bestimmte Sekundärspulentopologie zu bevorzugen, um eine optimale Energieübertragung von der mindestens einen Primärspule an die mindestens eine Sekundärspule zu erreichen.

Um die Interoperabilität von Sekundärspulen zu verbessern, werden derzeit zusätzliche Empfangsspulen hinzugefügt, die jeweils für den Empfang eines entsprechenden Magnetfeldmusters besser geeignet sind. Derartige Spulenanordnungen haben allerdings den Nachteil, dass sie ein hohes Gewicht und hohe Kosten verursachen.

Es ist daher Aufgabe der vorliegenden Erfindung, eine verbesserte Spulenvorrichtung für ein induktives Empfangssystem bzw. eine Sekundärspule mit einer höheren Interoperabilität bereitzustellen, die gleichzeitig kostengünstig und einfach konstruiert ist.

Hierzu sieht die vorliegende Erfindung eine Spulenvorrichtung gemäß Anspruch 1 vor. Diese ist insbesondere derart ausgebildet, dass sie eine erste Spule mit einem ersten Windungspfad A bzw. mehreren ersten Windungen und eine zweite Spule mit einem zweiten Windungspfad B bzw. mehreren zweiten Windungen aufweist, wobei die erste und die zweite Spule seriell miteinander verschaltet und gegenläufig zueinander ausgebildet sind. Das bedeutet insbesondere, dass die beiden Windungspfade derart ausgebildet sind, dass ein durch die beiden Spulen fließender Strom in dem ersten Windungspfad im Uhrzeigersinn und in dem zweiten Windungspfad gegen den Uhrzeigersinn, oder jeweils umgekehrt, fließt. Jede Windung hat einen innen angeordneten und einen außen angeordneten Leiter/-abschnitt, die insbesondere parallel zueinander angeordnet sind. Die innen angeordneten Leiter/-abschnitte sind dabei mittig in der Spulenvorrichtung angeordnet. Die erfindungsgemäße Spulenvorrichtung ist dadurch gekennzeichnet, dass die innen und außen angeordneten Leiterabschnitte von mindestens einem Teil der ersten Windungen derart angeordnet sind, dass die innen und außen angeordneten Leiter/-abschnitte einer jeweiligen Windung in einer Ebene liegen bzw. diese aufspannen, wobei diese Ebenen in der Richtung von der ersten Spule zu der zweiten Spule untereinander divergieren, so dass der Abstand zwischen den direkt benachbarten innen angeordneten Leiter/- abschnitten der ersten Spule größer ist als der Abstand zwischen den direkt benachbarten außen angeordneten Leiter/-abschnitten der ersten Spule. Entsprechend sind die innen und außen angeordneten Leiter/-abschnitte von mindestens einem Teil der zweiten Windungen sind derart angeordnet, dass die innen und außen angeordneten Leiterabschnitte einer jeweiligen Windung in einer Ebene liegen bzw. diese aufspannen, wobei diese Ebenen in der Richtung von der zweiten Spule zu der ersten Spule untereinander divergieren, so dass der Abstand zwischen den direkt benachbarten innen angeordneten Leiter/-abschnitten der zweiten Spule größer ist als der Abstand zwischen den direkt benachbarten außen angeordneten Leiter/-abschnitten der zweiten Spule.

Dies hat den Vorteil, dass die Charakteristiken einer Bipolarspule nicht überwiegen und somit die Spulenvorrichtung nicht nur auf diese Form und auf ein entsprechendes Magnetfeld ausgerichtet ist.

Es hat sich hierbei herausgestellt, dass die erfindungsgemäße Spulenvorrichtung eine höhere Interoperabilität mit verschiedenen Magnetfeldmustern, sowohl von Zirkular- als auch Bipolarspulen, aufweist. Dadurch ist die Spulenvorrichtung in ihrem Einsatzbereich flexibler und mit zahlreichen unterschiedlichen Primärspulen verwendbar.

Ein weiterer Vorteil ist der verbesserte bzw. vergrößerte Ausrichtungsversatz (engl. Alignment Offset) der Spulenvorrichtung. Das bedeutet, dass die Spulenvorrichtung gegenüber der Primärspule nicht mittig oder an einem bestimmten Punkt angeordnet sein muss, um stets die beste Übertragungseffizienz zu erhalten. Anders formuliert: die Spulenvorrichtung zeigt im Vergleich zum Stand der Technik eine geringere Reduzierung der Übertragungseffizienz, sobald diese von einem vorbestimmten Punkt gegenüber der Primärspule versetzt ist; die Übertragungseffizienz bleibt fast konstant. Somit ist eine Ausrichtung der Spulenvorrichtung einfacher und eine konstante Energieübertragung resistenter gegenüber Positionsabweichungen zwischen Sekundär- und Primärspule.

In einer bevorzugten Ausführungsform weist die Spulenvorrichtung zusätzlich eine derart ausgebildete Ferritanordnung auf, die mittig in der Spulenvorrichtung angeordneten Windungspfadabschnitte bzw. die innen angeordneten Leiter der ersten und der zweiten Spule auf einer Seite, insbesondere zur Seite eines induktiven Sendersystems bzw. einer Primärspule, zumindest teilweise abdeckt und die übrigen Windungspfadabschnitte der ersten und der zweiten Spule auf dieser Seite zumindest teilweise nicht oder überhaupt nicht abdeckt. Die Ferritanordnung unterstützt eine bessere Magnetfeldführung und somit eine effektivere Energieübertragung. Dies erfolgt insbesondere durch die mindestens teilweise Abdeckung der mittig angeordneten Windungspfadabschnitte, die durch mindestens eine auf den Zwischenleitern angeordneten Ferritanordnung erreicht wird und somit eine Solenoidspule imitiert. Hierbei werden vorzugsweise mindestens 50% der Windungspfadabschnitte abgedeckt, wobei auch Ausführungsformen existieren, in denen die mittig angeordneten Leiter durch eine oder mehrere Ferritanordnungen komplett abgedeckt sind. Die Ferritanordnung kann sich zusätzlich bis zu den beiden gegenüberliegenden außen angeordneten Leitern der ersten und zweiten Spule erstrecken und insbesondere somit diese zumindest teilweise abdecken.

Zusätzlich können die übrigen Windungspfadabschnitte, also alle Leiterabschnitte außer den mittig bzw. innen angeordneten Leitern, auch überhaupt nicht durch die Ferritanordnung abgedeckt sein; insbesondere zu der Seite hin, zu der die innen angeordneten Windungspfadabschnitte abgedeckt sind.

Die Ferritanordnung hat ebenfalls den Vorteil, als Halteeinrichtung für die Spulen zu dienen. Somit erfüllt die Ferritanordnung mehrere Funktionen, wie z.B. die Magnetfeldführung, insbesondere die Streufeldreduktion, sowie die Positionierung und Halterung der Spulenleiter.

In einer vorteilhaften Ausführungsform sind die erste und die zweite Spule jeweils spiralförmig, insbesondere auf zumindest einer Ebene, ausgebildet. Dabei erweitert sich der Durchmesser einer Windung zur nachfolgenden Windung der jeweiligen Spule. Dies hat den Vorteil, die Höhe der Spulenvorrichtung zu kontrollieren bzw. zu reduzieren und insbesondere eben zu gestalten. Die Windungen können hierbei eine kreisförmige, quadratische, rechteckige oder andere beliebige geometrische Form beschreiben.

Um eine besonders homogene Form der Spulenvorrichtung zu erzeugen, sind die innen angeordneten Leiter/-abschnitte zueinander benachbart und insbesondere zumindest teilweise parallel zueinander angeordnet. Diese Form ist homogen und effizient bei der Raumnutzung. Zusätzlich wird die Interoperabilität mit z.B. Zirkularspulen verbessert.

Des Weiteren hat es sich als vorteilhaft herausgestellt, wenn direkt benachbarte seitlich angeordnete Leiter der ersten und der zweiten Spule paarweise zumindest teilweise aufeinander angeordnet sind. Dadurch ist es möglich, die Breite der entsprechenden Pfadabschnitte zu verkleinern und somit die Ausdehnung bzw. Erstreckung der Spulenvorrichtung in seiner Breite und Länge zu reduzieren. Insbesondere aufgrund der erfindungsgemäßen Ferritanordnung ist eine Aufeinanderanordnung bzw. Aufeinanderstapelung der Leiter in den entsprechenden Pfadabschnitten von Vorteil, da die Raumnutzung in der Höhe der Spulenvorrichtung bereits durch die Ferritanordnung vorgegeben wird. Es besteht auch die Möglichkeit, drei oder mehr Leiter aufeinander anzuordnen, insbesondere abhängig von der Höhe der Ferritanordnung und dem Durchmesser des Leiters.

Vorzugsweise weist die Ferritanordnung zwei rechteckige, parallel zueinander angeordnete und beabstandete Ferritplattenkonstruktionen (oder Ferritformen, oder -einrichtungen) auf, wobei zwischen den Ferritplattenkonstruktionen zwei Zuleitungsleiter für die beiden Spulen verlaufen können. Dies hat den Vorteil, Gewicht einzusparen und gleichzeitig Raum für die Zuleitungsleiter bereitzustellen. Da die beiden Ferritplattenkonstruktionen identisch zueinander ausgebildet und zur Spulenvorrichtung symmetrisch angeordnet sein können, werden entsprechende Magnetfelder nicht negativ beeinflusst.

Des Weiteren hat es sich als vorteilhaft herausgestellt, wenn die Ferritplattenkonstruktionen aus einer Vielzahl von identisch ausgeformten bzw. ausgebildeten Ferritplatten und/oder aus Formteilen mit einer bestimmten magnetischen Permeabilität gebildet sind. Neben den bekannten Ferritplatten ist es auch möglich, Formteile zu verwenden. Alternativ oder zusätzlich zu den Ferritplattenkonstruktionen kann Ferritbeton als Ferritanordnung verwendet werden, der ähnlich wie Beton flüssig angerührt wird, in eine bestimmte Form gießbar ist und danach aushärtet. Dieser Beton weist eine geringere magnetische Permeabilität auf, lässt sich aber durch entsprechend geometrische oder strukturelle Dimensionierung an die Eigenschaften der Ferritplattenkonstruktion anpassen.

Vorzugsweise weisen die Ferritplattenkonstruktionen jeweils eine Vertiefung auf, in der die innen angeordneten Leiter/-abschnitte der der ersten und zweiten Spule angeordnet sind. Dies hat den Vorteil, die Höhe der Spulenvorrichtung zu reduzieren und den notwendigen Raum zu verkleinern. In einer weiteren vorteilhaften Ausführungsform erstrecken sich die Ferritanordnungen über die außen angeordneten Leiter/-abschnitte der ersten und zweiten Spule. Diese zusätzliche Erstreckung der Ferritanordnungen hilft der Stabilisierung der Vorrichtung als auch der Reduzierung der magnetischen Streufelder bzw. der Fokussierung des Magnetfelds auf die Spule/n.

Um die Magnetfeldform bzw. den Magnetfeldverlauf weiter zu verbessern, sind die innen angeordneten Leiter/-abschnitte auf einer ersten Ebene und die außen angeordneten Leiter/-abschnitte auf einer zweiten Ebene angeordnet, wobei die erste Ebene parallel und beabstandet zur zweiten Ebene angeordnet ist.

Die erfindungsgemäße Spulenvorrichtung kann sowohl in einem Sekundärsystem als auch in einem Primärsystem eingebaut sein. Das heißt, die Spulenvorrichtung kann entweder als Empfängervorrichtung, Sendervorrichtung oder Sender- und Empfängervorrichtung (bzw. Transceiver) dienen.

Die nachfolgend beschriebenen Figuren beziehen sich auf bevorzugte Ausführungsbeispiele der vorliegenden Erfindung und dienen nicht als Einschränkung, sondern der zusätzlichen Erläuterung und Klarstellung der Merkmale der gezeigten Spulenvorrichtungen. Es wird darauf hingewiesen, dass diese Merkmale, einzeln oder mehrere, mit den zuvor beschriebenen Ausführungsformen kombiniert werden können. Merkmale mit den gleichen Bezugszeichen aus verschiedenen Figuren können gleich sein.

Es zeigen
- Figur 1: eine Draufsicht auf eine erfindungsgemäße Spulenvorrichtung als ein bevorzugtes Ausführungsbeispiel,
- Figur 2A: die zwei identischen Ferritanordnungen von Figur 1, die jeweils eine Vielzahl von identisch geformten und großen Ferritplatten aufweisen,
- Figur 2B: einen Längsquerschnitt entlang einer Ferritanordnung von Figur 1,
- Figur 2C: eine Auswahl von drei verschiedenen Ferritplatten, die sich in Gewicht und Dicke unterscheiden,
- Figur 3: einen Längsquerschnitt durch eine Spulenvorrichtung gemäß einem weiteren bevorzugten Ausführungsbeispiel, und
- Figur 4: drei verschiedene Querschnittsansichten entlang der Breite der Spulenvorrichtung von Figur 3.

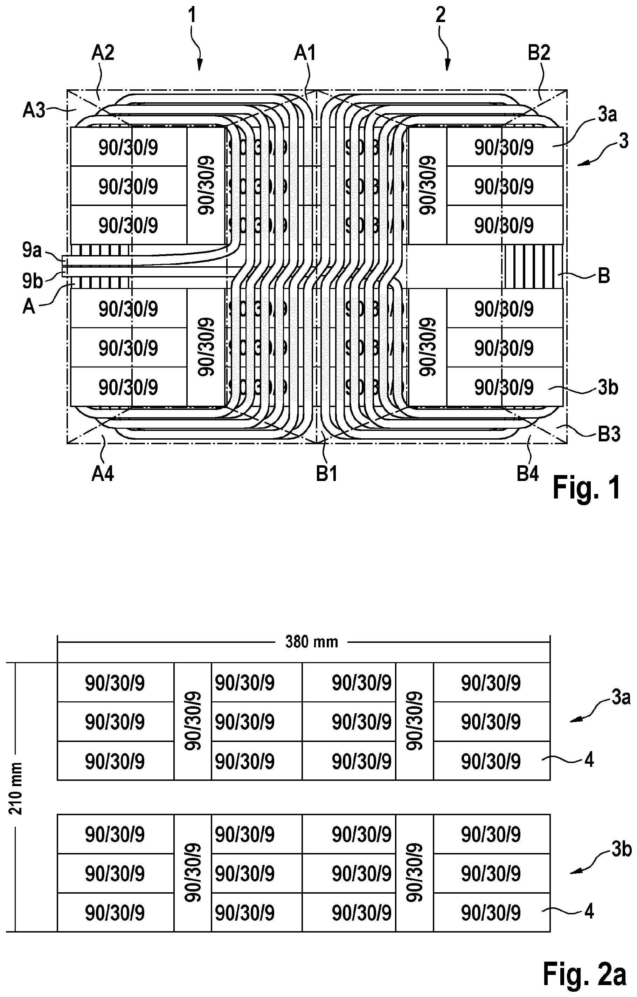

Figur 1 zeigt eine Draufsicht auf eine Spulenvorrichtung als ein bevorzugtes Ausführungsbeispiel gemäß der vorliegenden Erfindung mit einer ersten Spule 1 und einer zweiten Spule 2. Die Spulen 1, 2 weisen einen gemeinsamen elektrischen Leiter auf und sind daher elektrisch seriell miteinander verschaltet bzw. verbunden. Die Spulen 1, 2 sind spiralförmig, nebeneinander angeordnet und über die beiden Stromzuleiter bzw. Stromanschlüsse 9a, 9b elektrisch kontaktier- bzw. anschließbar. Bis auf einige kleinere Ausbildungen sind die beiden Spulen 1, 2 achsensymmetrisch zueinander angeordnet und ausgeformt. Jede Spule 1 und 2 weist ihren eigenen Windungspfad A bzw. B auf, der jeweils Teil des gemeinsamen elektrischen Leiters ist, und ist in jeweils vier Pfadabschnitte bzw. Leiterabschnitte aufgeteilt. Die erste Spule 1 ist in einen ersten Pfadabschnitt A1, einen zweiten Pfadabschnitt A2, einen dritten Pfadabschnitt A3 und einen vierten Pfadabschnitt A4 bereichsmäßig unterteilt, wobei die genannten Pfadabschnitte A1 bis A4 der Reihe nach gegen den Uhrzeigersinn angeordnet sind. Die zweite Spule 2 ist in einen ersten Pfadabschnitt B1, einen zweiten Pfadabschnitt B2, einen dritten Pfadabschnitt B3 und einen vierten Pfadabschnitt B4 bereichsmäßig unterteilt, wobei die genannten Pfadabschnitte B1 bis B4 der Reihe nach im Uhrzeigersinn angeordnet sind. Hierbei liegen sich folgende Pfadabschnitte innerhalb einer Spule gegenüber: Pfadabschnitte A2 und A4 (auch als seitlich angeordnete Leiter/-abschnitte der ersten Spule bezeichnet) sowie Pfadabschnitte A1 und A3 (auch als innen und außen angeordnete Leiter/-abschnitte der ersten Spule bezeichnet), Pfadabschnitte B2 und B4 (auch als seitlich angeordnete Leiter/-abschnitte der zweiten Spule bezeichnet) sowie Pfadabschnitte B1 und B3 (auch als innen und außen angeordnete Leiter/-abschnitte der zweiten Spule bezeichnet). Des Weiteren liegen die Pfadabschnitte A1 und B1 der ersten und zweiten Spule 1, 2 direkt nebeneinander. Ein Pfadabschnitt definiert in der vorliegenden Erfindung einen Bereich der Spule, in dem die darin angeordneten Leiter/-abschnitte bestimmte Eigenschaften hinsichtlich ihrer Anordnung und Ausformung aufweisen. Abweichungen zu dieser Definition existieren bei den Übergangsgrenzen zwischen den verschiedenen Windungspfadabschnitten, in denen die Leiter eine Biegung bzw. Kurve beschreiben und in den nächsten Windungspfadabschnitt führen.

Alle Windungspfadabschnitte A1 bis A4 und B1 bis B4 zeichnen sich dadurch aus, dass die darin angeordneten Leiter im Wesentlichen gerade und parallel zueinander angeordnet sind. Die Windungspfadabschnitte A1 und B1 zeigen eine Ausnahme, da in diesen Abschnitten die Leiter jeweils in ihrer Mitte eine Art Stufe bzw. Biegung aufweisen. Die Stufe dient dazu, um eine neue Windung bzw. Umlauf der ersten oder zweiten Spulen zu beginnen, den Durchmesser der Windung zur Mitte der Spulenvorrichtung zu vergrößern und somit die gerade und parallele Ausformung der übrigen Teile des gemeinsamen Leiters, insbesondere in den Abschnitten A1 und B1, zu ermöglichen. Der Abstand zwischen zwei benachbarten Leitern ist in den Pfadabschnitten A1 und B1 immer gleich groß und insbesondere größer als der Abstand zwischen den Leitern in den Pfadabschnitten A3 und B3. Durch den größeren Abstand der Leiter in den Abschnitten A1 und B1 werden die Eigenschaften eine Bipolarspulentopologie abgeschwächt. Das Besondere in den Abschnitten A3 und B3 ist die Anordnung der Leiter: Während z.B. ein Leiter in den Abschnitten B1, B2 und B4 am äußeren Rand der Spule verläuft, ist dieser Leiter im Abschnitt B3 am inneren Rand der Spule bzw. an dessen Spulenöffnung angeordnet. Umgekehrt gilt es für die inneren Leiter in den Abschnitten B1, B2 und B4, die im Abschnitt B3 am äußeren Rand der Spule bzw. der Spulenvorrichtung angeordnet sind. In den Pfadabschnitten A2, A4, B2 und B4 sind die Leiter paarweise aufeinander angeordnet, um damit die Breite der Spulenvorrichtung zu reduzieren. Des Weiteren weist die Spulenvorrichtung eine Ferritanordnung 3 aus zwei identisch ausgebildeten Ferritplattenkonstruktionen 3a und 3b auf. An dieser Stelle wird darauf hingewiesen, dass in anderen Ausführungsformen mehr als zwei und/oder unterschiedlich geformte und/oder große Ferritplattenkonstruktionen verwendet werden können. Die Ferritplattenkonstruktionen 3a und 3b erstrecken sich jeweils durch beide Spulen 1 und 2 und über die gesamte Länge der Spulenvorrichtung, d.h. vollständig vom linken Rand der ersten Spule 1 bis zum rechten Rand der zweiten Spule 2. Abhängig von der Höhe der Ferritanordnung ist es natürlich auch möglich, dass mehr als zwei Leiter aufeinander angeordnet werden, um die Spulenvorrichtung kompakter zu gestalten. An der Seite der Spulenvorrichtung sind die Stromzuleiter 9a und 9b zu sehen, die zwischen den Ferritplattenkonstruktionen 3a und 3b in die Mitte der Spulenvorrichtung verlaufen und schließlich durch jeweils eine Spiralisierung bzw. mehrere Windungen einmal im Uhrzeigersinn und einmal gegen den Uhrzeigersinn die Spulen 2 und 1 bilden.

Figur 2A zeigt eine Draufsicht auf die beiden Ferritplattenkonstruktionen 3a und 3b aus Figur 1, die jeweils aus einer Vielzahl von identisch ausgebildeten Ferritplatten 4 hergestellt sind. Jede Ferritplatte 4 ist 90 mm lang, 30 mm breit und 9 mm hoch. Jede Ferritplattenkonstruktion 3a und 3b ist jeweils 380 mm lang und 90 mm breit und sind derart parallel zueinander angeordnet, um eine Breite von 210 mm abzudecken. D.h. die Ferritplattenkonstruktionen 3a und 3b haben einen Abstand von 30mm zueinander. Die Ferritplatten 4 sind zueinander lückenlos, parallel und fluchtend angeordnet.

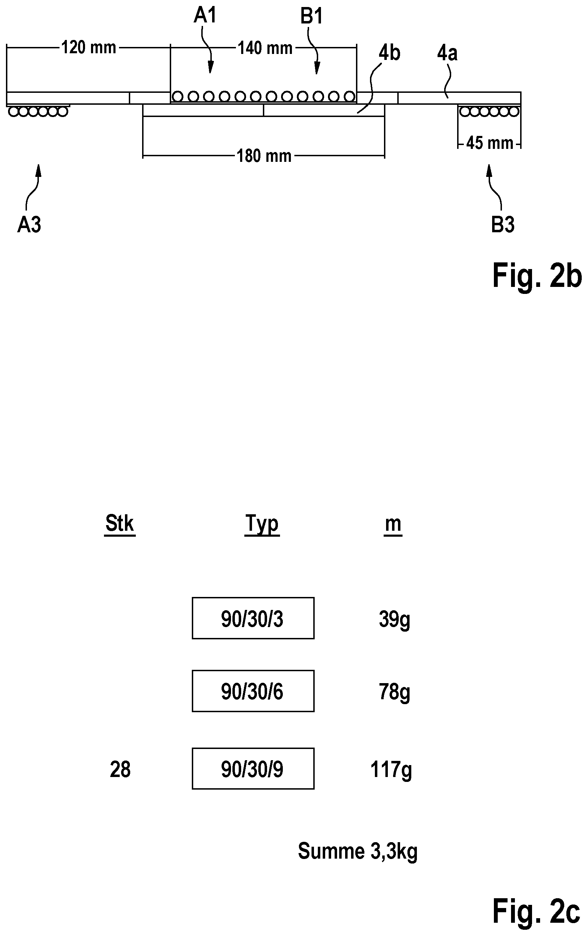

Figur 2B zeigt einen Längsquerschnitt der zuvor in Figur 2A beschriebenen Ferritplattenkonstruktionen 3a bzw. 3b, wobei zusätzlich die Leiter der Spulen 1 und 2 gezeigt werden. Hierbei sind die Leiter aus den Windungspfadabschnitten A1, A3, B1 und B3 dargestellt, d.h. die innen und außen angeordneten Leiter/- abschnitte der ersten Spule und der zweiten Spule. Die Ferritanordnung weist Ferritplatten 4a in einer ersten oberen Ebene und Ferritplatten 4b in einer zweiten unteren Ebene auf. Während die Leiter in den Pfadabschnitten A3 und B3 jeweils direkt nebeneinander angeordnet sind, sind die Leiter in den Pfadabschnitten A1 und B1 gleichmäßig voneinander beabstandet angeordnet. Dabei sind die Leiter aus den Pfadabschnitten A1 und B1 auf der ersten oberen Ebene und die Leiter der Pfadabschnitte A3 und B3 auf der zweiten unteren Ebene angeordnet. Die Gesamtlänge der unten angeordneten Ferritplatten 4b beträgt 180 mm, die auf der Länge zweier Ferritplatten basiert. Die beiden Ferritplattenanordnungen aus den Ferritplatten 4a auf der ersten Ebene weisen jeweils eine Länge von 120 mm auf, wobei der Abstand der beiden Anordnungen auf der ersten Ebene 140 mm beträgt.

In Figur 2C sind verschiedene Ferritplattentypen angegeben, die sich im Wesentlichen in ihrer Höhe und in ihrem Gewicht unterscheiden. Alle Ferritplatten haben eine Länge von 90 mm und eine Breite von 30 mm. Die 28 Ferritplatten mit einer Höhe von 9 mm, die in der Spulenvorrichtung in Figur 1 für beide Ferritanordnungen 3a und 3b verwendet wurden, haben ein Gesamtgewicht von 3,3 kg. An dieser Stelle wird darauf hingewiesen, dass anders geformte und/oder dimensionierte Ferritplatten vorgesehen sind, die für die hierin offenbarten Ausführungsformen verwendet werden können.

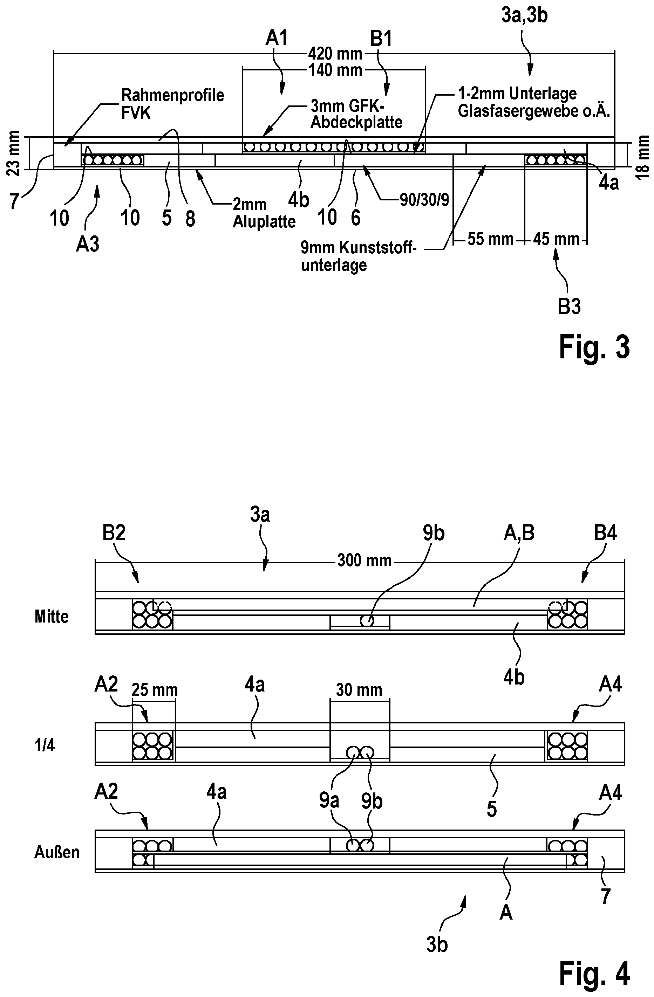

Figur 3 zeigt eine Längsquerschnittsansicht einer Spulenvorrichtung gemäß einem weiteren bevorzugten Ausführungsbeispiel, die im Vergleich zur Spulenvorrichtung aus Figur 1 oder 2B zusätzliche Merkmale aufweist. Die gesamte Spulenvorrichtung hat eine Höhe von 23 mm. Auf der Oberseite der Spulenvorrichtung ist eine 3 mm dicke GFK-Abdeckplatte 8 angeordnet, die 420 mm lang und 300 mm breit ist. Darunter sind links und rechts am Rand der Spulenvorrichtung FVK Rahmenprofile 7 angeordnet, die jeweils 18 mm hoch und breit sind. Dazwischen sind die Spulen und Ferritanordnungen mit den Ferritplatten 4a, 4b angeordnet, die bereits in den Figuren 1 und 2B beschrieben wurden. Auf der Unterseite der Spulenvorrichtung ist eine 2 mm dicke Aluminiumplatte 6 angeordnet, die genauso breit und lang ist, wie die GFK-Abdeckplatte 8.

In der ersten Ebene der Spulenvorrichtung, wie zuvor in Figur 2B beschrieben, sind die Leiter aus den Windungspfadabschnitten A1 und B1 dargestellt. Zwischen diesen Leitern und den unteren Ferritplatten 4b ist ein Glasfasergewebe 10 angeordnet, das eine Dicke von 1 bis 2 mm hat. In der zweiten Ebene sind die Leiter der Windungspfadabschnitte A3 und B3 angeordnet, die ebenfalls durch Glasfasergewebeunterlagen 10 von den Ferritplatten 4a und von der Aluminiumplatte 6 beabstandet sind. Zwischen den Leitern der Windungspfadabschnitte A3 und B3 sowie den Ferritplatten 4b sind Kunststoffunterlagen 5 mit einer Dicke von 9 mm angeordnet, die als Abstandshalter und Strukturunterstützungselement dienen. Die Kunststoffunterlagen 5 sind 55 mm breit und 9 mm hoch. Die Breite der Windungspfadabschnitte A3 und B3 beträgt jeweils 45 mm.

Figur 4 zeigt drei verschiedene Querschnittsansichten entlang der Breite der Spulenvorrichtung von Figur 3. Die obere Zeichnung in Figur 4 zeigt einen Querschnitt durch die Mitte der Spulenvorrichtung, der Grenzlinie zwischen den beschriebenen Windungspfadabschnitten A1 und B1. Hierbei ist insbesondere der Zuleitungsleiter 9b auf der unteren Ebene und ein Leiter aus dem Windungspfadabschnitt A1 oder B1 gezeigt. In der mittleren Zeichnung aus Figur 4 wird ein Querschnitt bei ungefähr einem Viertel der Länge der Spulenvorrichtung dargestellt. Hierbei sind in der Mitte die beiden Zuleitungsleiter 9a und 9b sowie die übereinander paarweise angeordneten Leiter in den Pfadabschnitten A2 und A4 gut erkennbar. Zusätzlich werden die Kunststoffunterlagen 5 unterhalb der Ferritplatten 4a angezeigt. In der untersten Zeichnung aus Figur 4 ist eine Querschnittsansicht am äußersten Rand der Spulenvorrichtung dargestellt, wobei der Querschnitt durch den Pfadabschnitt A3 verläuft und der Leiter A aus dem Pfadabschnitt A3 gezeigt wird. Darüber sind die Zuleitungsleiter 9a und 9b angeordnet.

### Bezugszeichenliste

- 1: erste Spule
- 2: zweite Spule
- 3: Ferritanordnung
- 3a: erste Ferritplattenkonstruktion
- 3b: zweite Ferritplattenkonstruktion
- 4: Ferritplatte
- 4a: Ferritplatte aus der ersten bzw. oberen Ebene
- 4b: Ferritplatte aus der zweiten bzw. unteren Ebene
- 5: Kunststoffunterlage
- 6: Aluplatte
- 7: FVK (Faserverstärkter Kunststoff) Rahmenprofil
- 8: GFK (Glasfaserverstärkter Kunststoff) Abdeckplatte
- 9a: Zuleitungsleiter
- 9b: Zuleitungsleiter
- 10: Glasfasergewebe-Unterlage
- A1: 1. Pfadabschnitt der 1. Spule bzw. innen angeordnete Leiter/-abschnitte
- A2: 2. Pfadabschnitt der 1. Spule bzw. seitlich angeordnete Leiter/-abschnitte
- A3: 3. Pfadabschnitt der 1. Spule bzw. außen angeordnete Leiter/-abschnitte
- A4: 4. Pfadabschnitt der 1. Spule bzw. seitlich angeordnete Leiter/-abschnitte
- B1: 1. Pfadabschnitt der 2. Spule bzw. innen angeordnete Leiter/-abschnitte
- B2: 2. Pfadabschnitt der 2.Spule bzw. seitlich angeordnete Leiter/-abschnitte
- B3: 3. Pfadabschnitt der 2.Spule bzw. außen angeordnete Leiter/-abschnitte
- B4: 4. Pfadabschnitt der 2.Spule bzw. seitlich angeordnete Leiter/-abschnitte
- A: erster Windungspfad (von der ersten Spule)
- B: zweiter Windungspfad (von der zweiten Spule)

## Patentansprüche

1. Spulenvorrichtung für ein induktives Empfangssystem, mit
einer ersten Spule (1) mit mehreren ersten Windungen, und
einer zweiten Spule (2) mit mehreren zweiten Windungen,
wobei die erste und die zweite Spule (1; 2) seriell miteinander verschaltet und gegenläufig zueinander ausgebildet sind, wobei jede Windung einen innen angeordneten Leiterabschnitt (A1, B1) und einen außen angeordneten Leiterabschnitt (A3, B3) aufweist, wobei die innen angeordneten Leiterabschnitte (A1, B1) mittig in der Spulenvorrichtung angeordnet sind,
**gekennzeichnet durch**
dass die innen und außen angeordneten Leiterabschnitte (A1, A3) von mindestens einem Teil der ersten Windungen derart angeordnet sind, dass die innen und außen angeordneten Leiterabschnitte (A1, A3) einer jeweiligen Windung in einer Ebene liegen bzw. diese aufspannen, wobei diese Ebenen in der Richtung von der ersten Spule zu der zweiten Spule untereinander divergieren, so dass der Abstand zwischen den direkt benachbarten innen angeordneten Leiterabschnitten (A1) der ersten Spule (1) größer ist als der Abstand zwischen den direkt benachbarten außen angeordneten Leiterabschnitten (A3) der ersten Spule, bzw. dass die innen und außen angeordneten Leiterabschnitte (B1, B3) von mindestens einem Teil der zweiten Windungen derart angeordnet sind,
dass die innen und außen angeordneten Leiterabschnitte (B1, B3) einer jeweiligen Windung in einer Ebene liegen bzw. diese aufspannen, wobei diese Ebenen in der Richtung von der zweiten Spule zu der ersten Spule untereinander divergieren, so dass der Abstand zwischen den direkt benachbarten innen angeordneten Leiterabschnitten (B1) der zweiten Spule (2) größer ist als der Abstand zwischen den direkt benachbarten außen angeordneten Leiterabschnitten (B3) der zweiten Spule.

2. Spulenvorrichtung nach Anspruch 1,
**gekennzeichnet durch,**
eine derart ausgebildete Ferritanordnung (3), die die innen angeordneten Leiterabschnitte der ersten und der zweiten Spule (1; 2) auf einer Seite, insbesondere zur Seite eines induktiven Sendersystems, zumindest teilweise abdeckt und die übrigen Leiterabschnitte (A2, A3, A4, B2, B3, B4) der ersten und der zweiten Spule (1; 2) auf dieser Seite zumindest teilweise nicht abdeckt.

3. Spulenvorrichtung nach Anspruch 1 oder 2,
**dadurch gekennzeichnet, dass**
die erste und die zweite Spule (1; 2) jeweils spiralförmig ausgebildet sind.

4. Spulenvorrichtung nach einem der Ansprüche 1 bis 3,
**dadurch gekennzeichnet, dass**
die innen angeordneten Leiterabschnitte zueinander benachbart und insbesondere zumindest teilweise parallel zueinander angeordnet sind.

5. Spulenvorrichtung nach einem der Ansprüche 1 bis 4,
**dadurch gekennzeichnet, dass**
die Ferritanordnung (3) zwei rechteckige, parallel zueinander angeordnete und beabstandete Ferritplattenkonstruktionen (3a; 3b) aufweist, wobei zwischen den beiden Ferritplattenkonstruktionen (3a; 3b) zwei Zuleitungsleiter (9a; 9b) für die beiden Spulen (1; 2) verlaufen.

6. Spulenvorrichtung nach Anspruch 5,
**dadurch gekennzeichnet, dass**
die Ferritplattenkonstruktionen (3a; 3b) aus einer Vielzahl von identisch ausgeformten Ferritplatten (4) gebildet sind und/oder aus Formteilen mit einer bestimmten magnetischen Permeabilität.

7. Spulenvorrichtung nach Anspruch 5 oder 6,
**dadurch gekennzeichnet, dass**
die Ferritplattenkonstruktionen (3a; 3b) jeweils eine Vertiefung aufweisen, in der die innen angeordneten Leiterabschnitte der der ersten und zweiten Spule angeordnet sind.

8. Spulenvorrichtung nach einem der Ansprüche 1 bis 7,
**dadurch gekennzeichnet, dass**
die innen angeordneten Leiterabschnitte auf einer ersten Ebene und die außen angeordneten Leiterabschnitte auf einer zweiten Ebene angeordnet sind, wobei die erste Ebene parallel und beabstandet zur zweiten Ebene angeordnet ist.

## Claims

1. Coil device for an inductive receiving system, with a first coil (1) with a plurality of first windings, and
a second coil (2) with a plurality of second windings, wherein the first coil (1) and the second coil (2) are connected in series with each other and are configured to run in opposite directions to each other, wherein each winding has an internally arranged conductor section (A1, B1) and an externally arranged conductor section (A3, B3), wherein the internally arranged conductor sections (A1, B1) are arranged centrally in the coil device,
**characterized in that**
the internally and externally arranged conductor sections (A1, A3) of at least a portion of the first windings are arranged in such a manner that the internally and externally arranged conductor sections (A1, A3) of a respective winding lie in a plane or span a plane, wherein these planes diverge from one another in the direction from the first coil to the second coil, so that the distance between the directly adjacent internally arranged conductor sections (A1) of the first coil (1) is greater than the distance between the directly adjacent externally arranged conductor sections (A3) of the first coil, and
**in that** the internally and externally arranged conductor sections (B1, B3) of at least a portion of the second windings are arranged in such a manner that the internally and externally arranged conductor sections (B1, B3) of a respective winding lie in a plane or span a plane, wherein these planes diverge from one another in the direction from the second coil to the first coil, so that the distance between the directly adjacent internally arranged conductor sections (B1) of the second coil (2) is greater than the distance between the directly adjacent externally arranged conductor sections (B3) of the second coil.

2. The coil device according to claim 1,
**characterized by**
a ferrite arrangement (3) that is configured in such a manner that it at least partially covers the internally arranged conductor sections of the first and second coils (1; 2) on one side, in particular on the side of an inductive emitting system, and at least partially does not cover the remaining conductor sections (A2, A3, A4, B2, B3, B4) of the first and second coils (1; 2) on this side.

3. The coil device according to claim 1 or 2,
**characterized in that**
the first coil (1) and the second coil (2) are respectively configured in the shape of a spiral.

4. The coil device according to any one of claims 1 to 3,
**characterized in that**
the internally arranged conductor sections are arranged adjacent to one another and in particular at least partially parallel to one another.

5. The coil device according to any one of claims 1 to 4, **characterized in that**
the ferrite arrangement (3) includes two rectangular ferrite plate structures (3a; 3b) that are arranged parallel to each other and spaced apart, wherein two supply conductors (9a; 9b) for the two coils (1; 2) run between the two ferrite plate structures (3a; 3b).

6. The coil device according to claim 5,
**characterized in that**
the ferrite plate structures (3a; 3b) consist of a plurality of identically shaped ferrite plates (4) and/or of moulded parts with a specific magnetic permeability.

7. The coil device according to claim 5 or 6,
**characterized in that**
the ferrite plate structures (3a; 3b) respectively include a recess in which the internally arranged conductor sections of the first and second coils are arranged.

8. The coil device according to any one of claims 1 to 7,
**characterized in that**
the internally arranged conductor sections are arranged on a first plane and the externally arranged conductor sections are arranged on a second plane, wherein the first plane is arranged parallel to and at a distance from the second plane.

## Revendications

1. Dispositif de bobine, destiné à un système récepteur inductif, pourvu d'une première bobine (1) dotée de plusieurs premiers enroulements et d'une deuxième bobine (2) dotée de plusieurs deuxièmes enroulements, la première et la deuxième bobines (1 ; 2) étant connectées en série l'une avec l'autre et étant conçues à contresens l'une de l'autre, chaque enroulement comportant un segment conducteur (A1, B1) placé à l'intérieur et un segment conducteur (A3, B3) placé à l'extérieur, les segments conducteurs (A1, B1) placés à l'intérieur étant placés au centre dans le dispositif de bobine,
**caractérisé**
**en ce que** les segments conducteurs (A1, A3) placés à l'intérieur et à l'extérieur d'au moins une partie des premiers enroulements sont placés de telle sorte que les segments conducteurs (A1, A3) placés à l'intérieur et à l'extérieur d'un enroulement respectif soient placés dans un plan ou définissent celui-ci, lesdits plans divergeant entre eux dans la direction de la première bobine vers la deuxième bobine, de telle sorte que l'écart entre les segments conducteurs (A1) directement voisins placés à l'intérieur de la première bobine (1) soit supérieur à l'écart entre les segments conducteurs (A3) directement voisins, placés à l'extérieur de la première bobine ou
**en ce que** les segments conducteurs (B1, B3) placés à l'intérieur et à l'extérieur d'au moins une partie des deuxièmes enroulements sont placés de telle sorte
que les segments conducteurs (B1, B3) placés à l'intérieur et à l'extérieur d'un enroulement respectif soient placés dans un plan ou définissent celui-ci, lesdits plans divergeant entre eux dans la direction de la deuxième bobine vers la première bobine, de telle sorte que l'écart entre les segments conducteurs (B1) directement voisins placés à l'intérieur de la deuxième bobine (2) soit supérieur à l'écart entre les segments conducteurs (B3) directement voisins, placés à l'extérieur de la deuxième bobine.

2. Dispositif de bobine selon la revendication 1,
**caractérisé par**
un ensemble de ferrite (3) conçu sorte à recouvrir au moins partiellement sur une face, notamment vers la face d'un système émetteur inductif les segments conducteurs placés à l'intérieur de la première et de la deuxième bobines (1 ; 2) et à ne pas recouvrir au moins partiellement les autres segments conducteurs (A2, A3, A4, B2, B3, B4) de la première et de la deuxième bobines (1; 2) sur ladite face.

3. Dispositif de bobine selon la revendication 1 ou 2, **caractérisé en ce que**
la première et la deuxième bobines (1 ; 2) sont conçues chacune en forme de spirale.

4. Dispositif de bobine selon l'une quelconque des revendications 1 à 3,
**caractérisé en ce que**
les segments conducteurs placés à l'intérieur sont placés au voisinage les uns des autres et notamment au moins partiellement à la parallèle les uns des autres.

5. Dispositif de bobine selon l'une quelconque des revendications 1 à 4,
**caractérisé en ce que**
l'ensemble de ferrite (3) comporte deux structures en plaques (3a ; 3b) de ferrite rectangulaires, placées à la parallèle l'une de l'autre et écartées, entre les deux structures en plaques (3a ; 3b) de ferrite s'écoulant deux conducteurs d'alimentation (9a ; 9b) pour les deux bobines (1 ; 2).

6. Dispositif de bobine selon la revendication 5,
**caractérisé en ce que**
les structures en plaques de ferrite (3a; 3b) sont constituées d'une pluralité de plaques (4) de ferrite de configuration identique et / ou en pièces moulées faisant preuve d'une perméabilité magnétique définie.

7. Dispositif de bobine selon la revendication 5 ou 6, **caractérisé en ce que**
les structures en plaques (3a ; 3b) de ferrite comportent chacune un renfoncement dans lequel sont placés les segments conducteurs placés à l'intérieur de la première et de la deuxième bobines.

8. Dispositif de bobine selon l'une quelconque des revendications 1 à 7,
**caractérisé en ce que**
les segments conducteurs placés à l'intérieur sont placés sur un premier plan et les segments conducteurs placés à l'extérieur sont placés sur un deuxième plan, le premier plan étant placé à la parallèle et avec un écart par rapport au deuxième plan.
